# EUROPEAN PATENT SPECIFICATION

(11) **EP 2 649 681 B1**
(45) Date of publication and mention of the grant of the patent: **30.12.2015**
(21) Application number: 11770867.7
(22) Date of filing: 01.09.2011
(51) Int. Cl.: B23H 9/00, B23H 7/06, B23H 11/00, H01P 7/10, H01P 11/00, H01P 3/123, H01Q 13/02

(54) **CORRUGATED COMPONENTS FOR MILLIMETER, SUBMILLIMETER AND TERAHERTZ WAVES**
GERIFFELTE KOMPONENTEN FÜR MILLIMETER-, SUBMILLIMETER- UND TERAHERTZ WELLEN
COMPOSANTS ANNELÉS POUR ONDES MILLIMÈTRIQUE, SOUS-MILLIMÈTRIQUE ET TÉRAHERTZIENNES

(30) Priority: 07.12.2010 US 420386 P
(43) Date of publication of application: 16.10.2013
(73) Proprietor: Ecole Polytechnique Fédérale de Lausanne (EPFL), 1015 Lausanne (CH)
(72) Inventor: MACOR, Alessandro, 1168 Villars-sous-Yens (CH)
(74) Representative: Grosfillier, Philippe
(86) International application number: PCT/IB2011/053835
(87) International publication number: WO 2012/076995

(56) References cited:
- WO-A2-99/04189
- GB-A- 1 586 585
- US-A- 4 408 208
- DE RIJK E ET AL: "Note: Stacked rings for terahertz wave-guiding", REVIEW OF SCIENTIFIC INSTRUMENTS, AIP, MELVILLE, NY, US, vol. 82, no. 6, 8 June 2011 (2011-06-08), pages 66102-66102, XP012146540, ISSN: 0034-6748, DOI: 10.1063/1.3597579

## Description

### FIELD OF THE INVENTION

The present invention relates to a new approach to manufacture corrugated components for the transmission of electromagnetic waves with frequencies up to 100 THz.

More specifically, the present invention concerns the fabrication of circular, rectangular, or any suitable shape, corrugated waveguides, corrugated down or up-tapers, corrugated horn antennas, corrugated cavities, and in general components needing an internal corrugation.

In the present invention, corrugation radii, corrugation widths, corrugation shape, corrugation depths and/or corrugation periods can be changed independently as suited along the transmission path.

Moreover, for high power transmission lines, active cooling can be easily implemented in closeness of the corrugated surface and multi-channel waveguides can be realized as well using the principles of the present invention.

The proposed approach can also be extended in order to realize any suitable cavity shape without corrugation when conventional machining is difficult or impossible to be employed.

### BACKGROUND OF THE INVENTION AND PRIOR ART

Due to low absorption, low dispersion, efficient coupling, and wave confinement, corrugated components apt for Millimeter, Submillimeter and Thz (MMW-THz) waves are crucial in the signal transmission for experimental set-ups in:
- Physics applications such as fundamental studies of nanostructures and Quantum coherence and control experiments, as transmission lines for plasma additional heating techniques in plasma reactors based on magnetic confinement (e.g. Tokamaks, Stellarators)
- Chemistry studies on gas phase spectra and dynamics, membranes, Langumir-Blodget (LB) films, self-assembled monolayers (SAMs), phonon modes of inorganic and organic crystal, electron spin resonance (ESR), Dynamic Nuclear Polarization enhanced Nuclear Magnetic Resonance (DNP-NMR), Dissolution DNP-NMR techniques, high resolution Electron Paramagnetic Resonance (EPR), high resolution FerroMagnetic Resonance (FMR)
- Medical THz imaging or spectroscopy where endoscopic techniques are required for environments that are otherwise difficult to access
- Terahertz sensing and imaging for security applications such as for explosive detection.

Moreover corrugated waveguides could be a crucial element for new method for drilling and fracturing subsurface formations and more particularly for method and system using millimeter- wave radiation energy. In fact drilling at depths beyond 7000 meters is increasingly difficult and costly using present rotary drilling methods.

The Millimeter, Submillimeter and THz (MMW-THz) wave region up to 100 THz in the electromagnetic spectrum is a frontier area for research in physics, chemistry, biology, material science and medicine.

Sources for high quality radiation in this area have been scarce, but this gap has recently begun to be filled by a wide range of new technologies. Terahertz radiation is now available in both continuous wave (CW) and pulsed form. New sources have led to new scientific applications in many areas, as scientists are becoming aware of the opportunities for research progress using MMW-THz waves.

MMW-THz waves lie above the frequency range of traditional electronics, but below the range of optics. The fact that the THz frequency range lies in the transition region between photonics and electronics has led to unprecedented creativity in source and transmission components development.

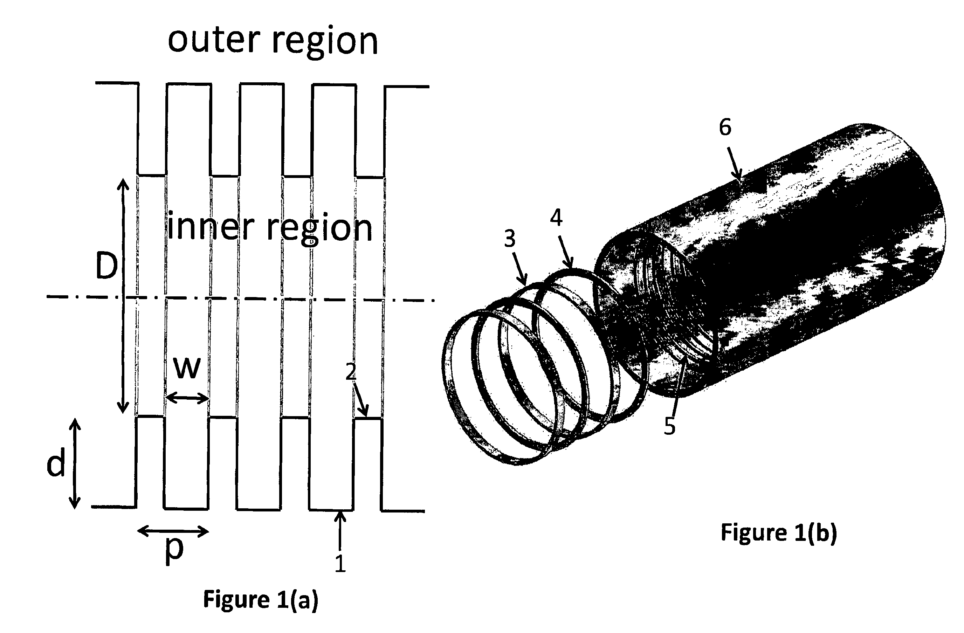

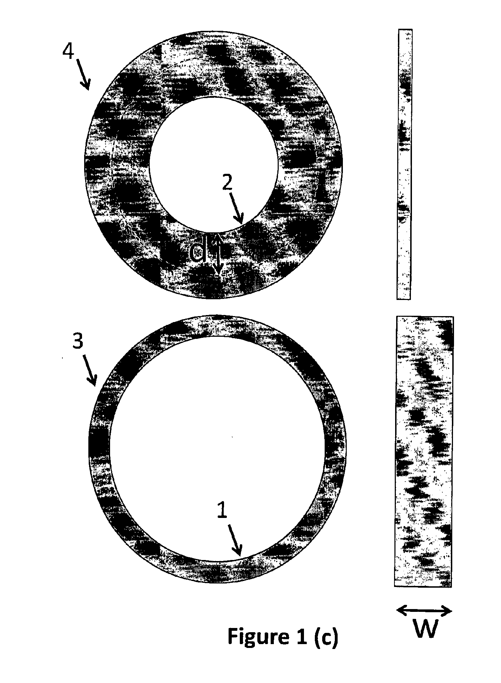

The barriers to perform experiments using MMW-THz radiation are considerable because of the need not only of a THz source, but also a chain of elements for the signal transmission, manipulation and receiving. Corrugated waveguides, corrugated down or up-tapers, corrugated high and low-pass filter, corrugated horn antennas, corrugated cavities are employed with success in the GHz range but are very difficult or impossible to manufacture when increasing frequency toward the THz range. In fact, corrugation period, width and depth (fig.1) are related to the wavelength λ. In corrugated waveguides, for instance, the period has to be less than λ/2 (p < λ/2) of the lowest suited frequency (e.g. to transmit more than 1 THz, period has to be less than λ/2 =0.15 mm), while width (w, as wide as possible) and depth (d ≈ λ/4) can be used to tune the bandwidth. Finally, in the case of a cylindrical component, the diameter should be bigger than the wavelength (D >> λ).

The use of corrugations implies very low losses in transmission. Power losses are on the order of 0.05dB per 100m (about 0.01% per meter) for the frequency for which corrugation has been designed and anyway well below 0.5dB per 100m (about 0.12% per meter) for ten times the nominal frequency.

Prior art publications include the following documents: US 4,408,208, WO 2004/032278, WO 03/096379, US, 4,492,020, GB 1 586 585, JP 52044140, US 3,914,861, US 3,845,422, WO 99/59222, JP 2004282294, US 3,011,085, WO 2008/073605.

US 4,408,208 for example concerns corrugated feed horns for circularly polarized antennas including super high frequency and extra high frequency parabolic antennas operating in the 12-100 GHz range. In this prior art, the feed horn is made by dip brazing a plurality of laminations providing alternate fins and grooves in an inner conical configuration. An assembly of laminations is built with pins which align in registry the stacked laminations. Braze metal wires are added into a set of apertures provided on the assembly. The assembly is then dipped in a molten salt solution heated above the melting point of the braze metal wires but below the melting point of the laminations. Each braze metal wire melts in the solution and creeps or wicks by capillary action along the interfaces between the laminations. The wires are thin enough that there is not enough material to creep into the grooves between the fins along the inner conical surface of the horn. This wicking inward from the outside thus facilitates prevention of braze material build-up in the grooves. Finally, the outer surface of the assembly is then machined to a conical periphery down to base to provide a horn.

GB 1 586 585 discloses radio horns and in particular radio horns whose internal shapes render difficult their manufacture by machining from the solid wherein the horn is a corrugated elliptical horn antenna. According to GB 1 586 585 an elliptical radio horn is formed of a stack of plates each of which individually has an elliptical aperture which defines the inner shape of the horn over the length thereof formed by the thickness of said individual plate, said plates being normally held together by nuts and bolts or studs passing therethrough.

### PRINCIPLE OF THE INVENTION

An aim of the present invention is to improve the known devices and methods.

More specifically, an aim of the present invention is to provide corrugated components for electromagnetic waves with frequency up to several terahertz (THz).

According to an aspect, a core idea of the present invention is to create corrugations from a plurality of rings or plates stacked together in a hollow guiding rod (fig.1). In the following description, the notion of ring or plate will be used indifferently, with no limitation on the outer shape of this element (circular, square, triangular etc.)

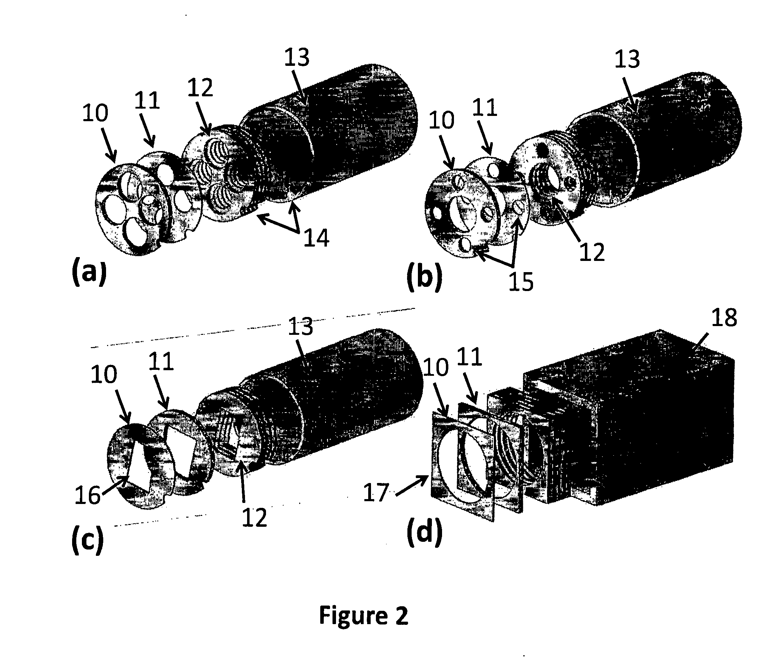

The external ring's or plate's shape corresponds to the internal shape of the hollow guiding rod. The external ring's shape remains unchanged along the structure while the internal hollow shape of rings can assume every suited appearance (fig.2).

The rings thickness is alternatively varied to create corrugation with suited slot and ridge (fig.1). The internal ring's shapes alternatively vary to create the suited depth. The outer edge of rings (circular in fig.1c) could be shaped with indentations in order to reduce friction against the internal wall of the hollow guiding rod.

With the proposed invention, a cavity can be assembled as well by transferring cavity shape into a discrete sequence of thin rings.

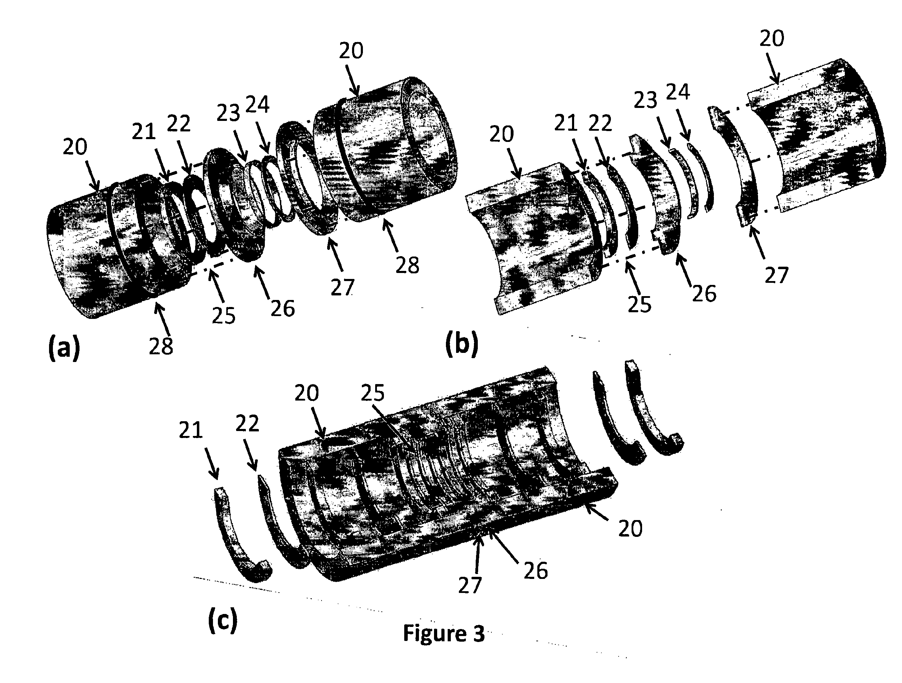

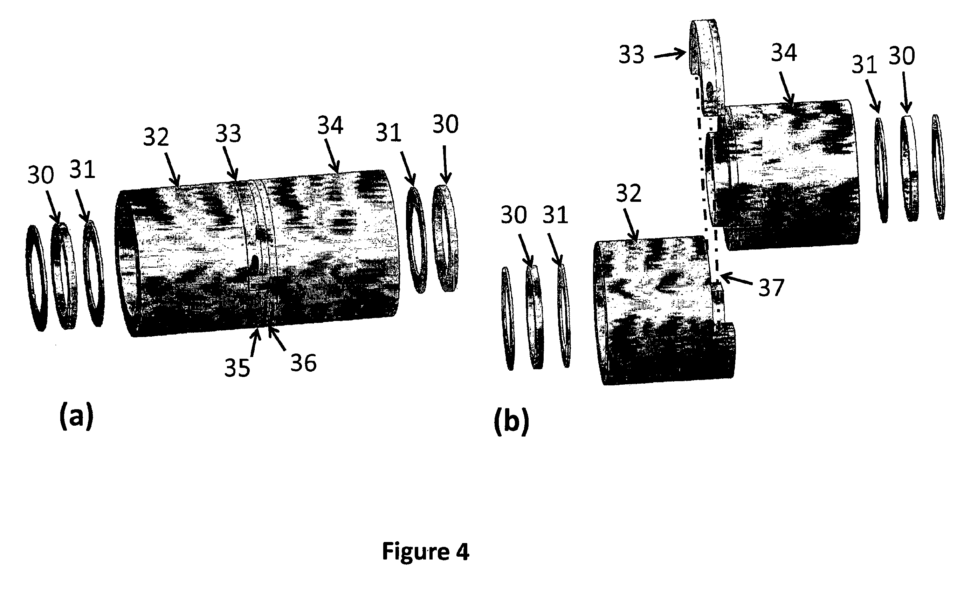

Even for low frequencies, when conventional machining techniques can be employed the proposed method has several advantages: first, longer segments of waveguides, can be created, linked and aligned together avoiding problems of signal deterioration at the junctions (fig.3). Second, with no influence on the alignment, special flanges can be employed to disconnect segments of the transmission line. The elements can be removed perpendicularly to the main waveguide axis (fig.4).

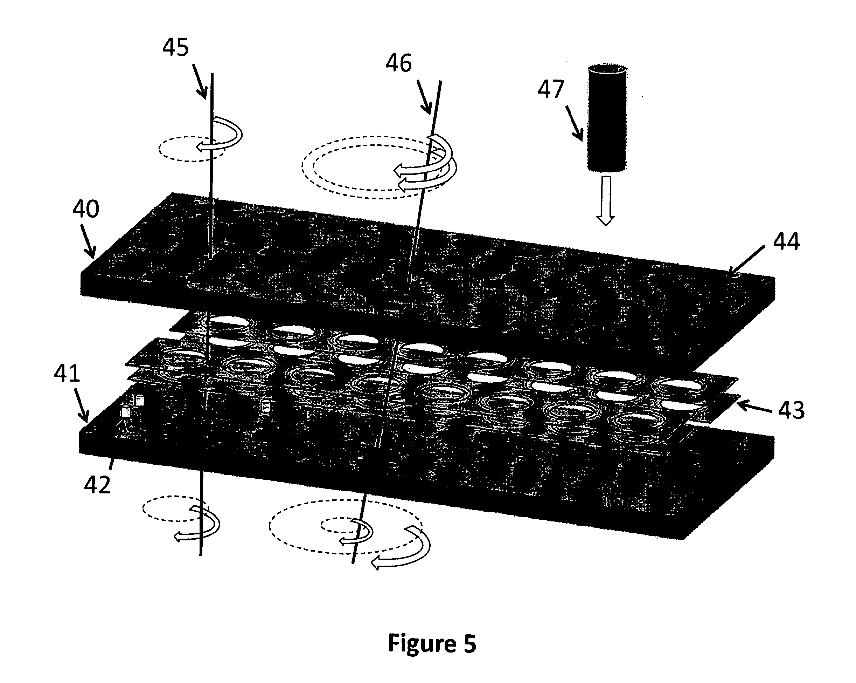

By stacking hundreds of calibrated metal plates homogenously compressed between two metallic shells by a series of screws, electric discharge machining (EDM) can be employed advantageously to simultaneously cut hundreds of rings or plates that will be used to form the device of the present invention (fig.5).

### DETAILED DESCRIPTION OF THE INVENTION

The invention is defined in claim 1.

The present invention will be better understood from a detailed description of several embodiments and from the drawings which show
Figures 1(a) to 1(c) illustrates the principle of the present invention;
Figures 2(a) to 2(d) illustrates examples of different possible waveguide configuration obtained by stacking *ad hoc* cut rings;
Figures 3(a) to 3(c) illustrates an exploded view of all elements needed to compose two segments of circular corrugated waveguide according to the present invention in order to preserve the corrugation continuity between two modules;
Figures 4(a) and 4(b) illustrates special flanges for vertical disconnection based on the flanges design of figures 3(a)-3(c) that preserves the corrugation continuity between two modules;
Figure 5 illustrates an example of set-up for the simultaneous cut of large numbers of rings by Electric Discharge Machining (EDM).

Hence, an object of the present invention is to provide corrugated devices, such as circular, rectangular, or any suitable shape corrugated waveguides, corrugated down or up-tapers, corrugated horn antennas, corrugated cavities, and in general components needing an internal corrugation, to transmit signals in the MMW-THz frequency region.

To achieve the above mentioned objects, the invention proposes a new approach in the manufacture process based on stacking a plurality of plates or rings in a hollow guiding rod.

This new approach permits to build waveguide segments with length only limited by precision in the manufacturing of hollow guiding rods. This means segments up to at least one meter for an inner diameter of the guiding rod on the order of centimeters to millimeters.

In one embodiment, the invention relates to a corrugated component for the transmission and manipulation of electromagnetic signals with frequencies from 30 GHz to 100 THz, wherein said component comprises an assembly of a plurality of plates stacked together in a hollow guiding rod wherein said plates have at least one aperture shape with alternating size to form a slot or a ridge in alternate fashion, wherein the external shape of said plates corresponds to the internal shape of the hollow guiding rod.

In one embodiment, said at least one aperture has a circular shape.

In one embodiment, said at least one aperture has a shape different from circular.

In one embodiment, the aperture shape is fixed along the components or variable.

In one embodiment, the plates comprise at least two apertures, one being used for cooling of the component.

In one embodiment, the corrugated component comprises a first flange connected to a first rod and a second flange connected to a second rod, said flanges cooperating together to allow a connection of said rods together without discontinuity at the junction.

In one embodiment, the flanges are auto-aligning.

In one embodiment, the plates are compressed via a flange fixed by a series of screws.

In one embodiment, the corrugated component comprises corrugated down or up-tapers.

In one embodiment, the corrugated component forms a corrugated horn antenna.

In one embodiment, the invention relates to an assembly comprising a plurality of corrugated components as defined previously.

In one embodiment, the invention relates to a method of forming a corrugated components for the transmission of electromagnetic signals with a frequency up to several THz, wherein the method comprises the stacking of a plurality of plates each having at least one aperture at least for the transmission of signals to form an assembly of plates, said assembly of plates being introduced in a hollow guiding rod, the inner shape of which corresponding to the outer shape of said plates.

In one embodiment, the plates are compressed in a hollow rod via at least a set of screws and a flange.

In one embodiment, the flanges are used to connect one rod to another thus forming an assembly of corrugated components without discontinuity at their junction.

In one embodiment, the invention relates to a method for manufacturing of plates to be stacked into a hollow guiding rod, said manufacturing method uses two shells to compress stacked calibrated plates to simultaneously cut them with EDM techniques.

An example of the principle of the invention is illustrated in figures 1(a) to 1(c) which is described in more detail below.
Figure 1 (a) illustrates a geometry of circular corrugated waveguide with diameter, D, period, p, width, w, and depth, d.
Figure 1 (b) illustrates an example of the principle of the present invention: a circular corrugated waveguide with corrugation obtained by two series of circular rings 3, 4 stacked alternatively in a hollow guiding rod 6, the reference 5 identifying the obtained corrugations.
Figure 1(c) illustrates the geometry of the two series of rings 3, 4 needed to create corrugations, i.e. a slot 1 and a ridge 2 the ring 4 having a smaller width than the ring 3.

When needed, as illustrated in figures 2(a) - 2(d), multi-channel waveguides can be realized and active cooling can be easily implemented in closeness of the corrugated surface (fig.2).
Figure 2(a) illustrates a first configuration of a multi-channel circular corrugated waveguide. An assembly of plates having the shape of rings with apertures to create slots 10 and rings with apertures to create ridges 11 is introduced in the hollow circular rod 13 that provides the housing for the stacked rings (referenced as 12). The elements comprise each aligning means to allow a proper alignment of the inserted rings. In this configuration, the waveguide comprises four channels and a groove 14 that cooperates together with a corresponding boss in the rod for the alignment of the rings 1, 2.
Figure 2(b) illustrates an example of an actively cooled waveguide: central apertures determine corrugation while the four outer apertures can be used to host cooling pipes. The rings 10, 11 comprise a central aperture and four side apertures 15 that can be used to build a cooling channel once the rings have been stacked in the rod 13.
Figure 2(c) illustrates an example of a rectangular corrugated waveguide, each ring 10, 11 comprising a square aperture 16 and figure 2(d) another configuration where the plates 17 have a square outer shape and they are placed in a square rod 18 to show that the rod itself may also have any desirable shape.

In general any fixed or variable corrugation shape or aperture shape can be created when using the characteristics and principle of the present invention.

Special auto-aligning flanges to link the different parts of the transmission line have been designed. They permit to employ the approach proposed with this invention without discontinuity also at the junction between two waveguide segments avoiding signal deterioration due to imperfections on the corrugation period (fig.3). Since flanges are fixed to the hollow guiding rod with series of screws they also act as ring-stopper and are used to mechanically compress the stacked rings. Typically, the flanges may be made in synthetic materials which are then metalized, for example by the method disclosed in PCT application N° PCT/IB2011/053831 filed on September 1st, 2011 in the name of the same Applicant as the present application.

Figures 3(a) to 3(c) illustrate exploded views of all elements used to compose two segments of circular corrugated waveguide and the two special flanges to stack rings at the junction.

More specifically, figures 3(a) to 3(c) illustrate a first perspective view and cut views of two segments 20 (hollow guiding rods 20), for example as shown previously in figures 1(b) or 2(a) - 2(d) which are to be connected together.

References 21 and 22 identify rings to create slots and rings to create ridges i.e. the corrugated structure as described hereabove. Next to said rings, there are two flanges 26, 27 each respectively attached to a rod 20 for example via screws represented by their axis 25. The system also comprises adapted rings to create slots 23 and rings to create ridges 24 which are placed in the flanges at the junction of the two rods 20 such that the corrugation made by the stacked rings can be maintained without discontinuity in the junction, see figure 3(c).

Both flanges 26, 27 preferably nest into each other as illustrated in figure 3(c) to provide a tight fit and a proper alignment between the rods 20.

Preferably, the flanges 26, 27 are designed to link two waveguide segments and stack rings and to act as ring-stoppers. Accordingly, they are fixed to the hollow guiding rod with screws 25 that may determine the suited strength on the stacked rings.

As an example, rings such as O-rings 28 may be employed with threaded connectors to fasten waveguide components, said rings 28 being attached to the outer surface of the rods. They thus allow the connection (i.e. coupling) of two rods one with the other.

Alternately flanges are proposed to allow disconnecting waveguide intermediate elements with no influence on the alignment of the remaining waveguides components as shown in figures 4(a) and (b)

According to the embodiment of figures 4(a) and 4(b), said flanges allow a disconnection perpendicular to the waveguide axis, of the rods based on the flanges design of figure 3.

These flanges can be used to disconnect waveguide intermediate elements with no influence in the alignment of the remaining waveguide components. As illustrated in the figures 4(a) to 4(b), the waveguide of this embodiment comprises two rods 32, 34 containing rings 30, 31 building the ridges and slots according to the principles of the present invention. One rod comprises a half bridge at its end which cooperates with an attachment bridge part 33 as explained in the following. The second rod 34 comprises an extension which allows its alignment with rod 32 once rods 32, 34 are assembled, the extension being nested in the bridge. Once both rods 32, 34 are nested together, bridge 33 is added over extension and fixed to bridge for example via screws which are illustrated by their axis 37.

As an example, rings such as O-rings can be employed with standard threaded connectors to fasten waveguide components (as in figures 3(a) - 3(c) and described above).

The entire waveguide is vacuum compatible.

It is clear that to realize meters of transmission line with corrugation period on the order of tenth of millimeter or less, one needs several thousands of rings. This apparent limitation can for instance be bypassed by stacking calibrated plates having the suitable thickness. Then, two metallic shells are used to compress the calibrated plates. This set-up permits the simultaneous cut of apertures of hundreds of rings by electric discharge machining (EDM). As shown in figure 5 reference 43, several columns can be cut using the same metallic shells.

To create rings for corrugated down or up taper, corrugated cavity, and corrugated frequency filter, EDM is still useful. By tilting the EDM wire or using sinker EDM, internal ring's shapes can be cut (fig.5 reference 46). In general any corrugated can be realized with stacked plates combined with EDM cut. Reference 47 indicates a punching tool that can also be used in the present context to for cutting the plates.

Then, the corrugation of the assembled waveguide can possibly be golden plated.

More specifically the system comprises an upper metallic shell 40, a lower metallic shell 41, Metallic pins 42 for the metallic plates alignment, a plurality of metallic plates 43 with calibrated thickness equal to the ridge or the slot of the suited corrugation according to the principles of the present invention, threaded holes 44 for screws used to compress metallic plates during the EDM cut. Reference 45 illustrates the EDM wire's path to produce hundreds of rings or plates with equal inner and outer radius and reference 46 illustrates a tilted EDM wire's path to produce hundreds of rings for down or up tapers, corrugated frequency filters, cavities, horns and in general any corrugated structures. Sinker EDM can be used in conjunction with wire EDm to achieve the above mentioned objectives.

Of course, the different examples and embodiments described above are for illustrative purposes and should not be construed in a limiting manner. The different embodiments described herein may be combined together as required for the intended use and equivalent means may be used.

All elements of the above mentioned invention and embodiments may be made out of any material as long as all surfaces in contact with the region where electromagnetic waves reflect and propagate are metallic or metal plated with a sufficient thickness for them to be reflecting, this thickness depending on the propagated frequency. For example, such materials may include all metals such as, but not limited to, aluminum, stainless steel, titanium, copper or brass. Other non conducting materials may be used such as, but not limited to, various plastics or polymers like PEEK, vespel, Kel-F, epoxy plasitcs, glass fibers, polyester, Plexiglas, PTFE or any other ceramic or composite materials. If non conducting materials are used to manufacture the stacked plates/rings, they can be metal plated before or after assembly to guarantee the good functioning of the corrugated components.

## Claims

1. A corrugated component for the transmission and manipulation of electromagnetic signals with frequencies from 30 GHz to 100 THz, said component comprises an assembly of a plurality of plates (3,4) stacked together in a hollow guiding rod (6), wherein said plates (3,4) comprise first plates (3) having an aperture shape to form a slot (1) and second plates (4) having an aperture shape to form a ridge (2) said plates being stacked in alternate fashion and the external shape of said plates (3,4) corresponds to the internal shape of the hollow guiding rod (6).

2. The corrugated component as defined in claim 1, **characterized in that** said external shape comprises indentations

3. The corrugated component as defined in claim 1 or 2, **characterized in that** said at least one aperture has a circular shape (10,11) or a shape different from circular (16).

4. The corrugated component as defined in one of the preceding claims, **characterized in that** the aperture shape is fixed along the components or variable.

5. The corrugated component as defined in one of the preceding claims, **characterized in that** said plates comprise at least two apertures (10,11,15), one being (15) used for cooling of the component.

6. The corrugated component of one of the preceding claims, **characterized in that** it comprises a first flange (26) connected to a first rod (20) and a second flange (27) connected to a second rod (20), said flanges (26,27) cooperating together to allow a connection of said rods (20) together without discontinuity at the junction.

7. The corrugated component as defined in one of the preceding claims, **characterized in that** the flanges (26,27) are auto-aligning.

8. The corrugated component as defined in one of the preceding claims, **characterized in that** the plates (3,4) are compressed via a flange (26,27) fixed by a series of screws (25).

9. The corrugated component as defined in one of the preceding claims, **characterized in that** it comprises corrugated down or up-tapers.

10. The corrugated component as defined in one of the preceding claims, forming a corrugated horn antenna.

11. An assembly comprising a plurality of corrugated components as defined in one of the preceding claims.

12. A method of forming a corrugated component for the transmission of electromagnetic signals with a frequency up to several THz as defined in one of the preceding claims 1 to 10, the method comprises the stacking of a plurality of said first and second plates each having at least one aperture at least for the transmission of signals to form an assembly of first and second plates placed in alternate fashion, said assembly of plates being introduced in said hollow guiding rod, the inner shape of which corresponds to the outer shape of said plates.

13. The method of claim 12, **characterized in that** the plates are compressed in said hollow guiding rod via at least a set of screws and a flange.

14. The method of claim 12 or 13, **characterized in that** the flanges are used to connect one rod to another thus forming an assembly of corrugated components without discontinuity at their junction.

## Patentansprüche

1. Gerillte Komponente für die Übertragung und Manipulierung von elektromagnetischen Signalen mit Frequenzen von 30 GHz bis 100 THz, wobei die Komponente eine Anordnung aus einer Vielzahl von Platten (3, 4) umfasst, die in einem hohlen Führungsstab (6) zusammengestapelt sind, wobei die Platten (3, 4) erste Platten (3) mit der Form einer Öffnung zum Bilden eines Schlitzes (1) und zweite Platten (4) mit der Form einer Öffnung zum Bilden einer Erhöhung (2) umfassen, wobei die Platten abwechselnd gestapelt sind und die äußere Form der Platten (3, 4) der inneren Form des hohlen Führungsstabs (6) entspricht.

2. Gerillte Komponente nach Anspruch 1, **dadurch gekennzeichnet, dass** die äußere Form Vertiefungen umfasst.

3. Gerillte Komponente nach Anspruch 1 oder 2, **dadurch gekennzeichnet, dass** mindestens eine Öffnung eine kreisförmige Form (10, 11) oder eine Form (16) hat, die sich von der Kreisform unterscheidet.

4. Gerillte Komponente nach einem der vorhergehenden Ansprüche, **dadurch gekennzeichnet, dass** die Öffnungsform entlang den Komponenten festliegt oder variabel ist.

5. Gerillte Komponente nach einem der vorhergehenden Ansprüche, **dadurch gekennzeichnet, dass** die Platten mindestens zwei Öffnungen (10, 11, 15) umfassen, wobei eine (15) davon dem Kühlen der Komponente dient.

6. Gerillte Komponente nach einem der vorhergehenden Ansprüche, **dadurch gekennzeichnet, dass** sie einen ersten Flansch (26), der mit einem ersten Stab (20) verbunden ist, und einen zweiten Flansch (27), der mit einem zweiten Stab (20) verbunden ist, umfasst, wobei die Flansche (26, 27) zusammenwirken, um zu gestatten, dass die Stäbe (20) ohne Unterbrechung am Übergang miteinander verbunden sind.

7. Gerillte Komponente nach einem der vorhergehenden Ansprüche, **dadurch gekennzeichnet, dass** die Flansche (26, 27) selbstausrichtend sind.

8. Gerillte Komponente nach einem der vorhergehenden Ansprüche, **dadurch gekennzeichnet, dass** die Platten (3, 4) über einen Flansch (26, 27), der durch eine Reihe von Schrauben (25) befestigt ist, zusammengedrückt sind.

9. Gerillte Komponente nach einem der vorhergehenden Ansprüche, **dadurch gekennzeichnet, dass** sie gerillte Verjüngungen nach unten oder oben umfasst.

10. Gerillte Komponente nach einem der vorhergehenden Ansprüche, die einen gerillten Hornstrahler bildet.

11. Anordnung, umfassend eine Mehrzahl von gerillten Komponenten nach einem der vorhergehenden Ansprüche.

12. Verfahren zum Bilden einer gerillten Komponente für die Übertragung von elektromagnetischen Signalen mit einer Frequenz von bis zu mehreren THz nach einem der vorhergehenden Ansprüche 1 bis 10, wobei das Verfahren das Stapeln einer Vielzahl der ersten und zweiten Platten umfasst, wobei jede mindestens eine Öffnung mindestens für die Übertragung von Signalen hat, um eine Anordnung von ersten und zweiten abwechselnd platzierten Platten zu bilden, wobei die Anordnung aus Platten in den hohlen Führungsstab eingeführt wird, dessen innere Form der äußeren Form der Platten entspricht.

13. Verfahren nach Anspruch 12, **dadurch gekennzeichnet, dass** die Platten in dem hohlen Führungsstab über mindestens einen Satz Schrauben und einen Flansch zusammengedrückt sind.

14. Verfahren nach Anspruch 12 oder 13, **dadurch gekennzeichnet, dass** die Flansche dazu dienen, einen Stab mit einem anderen zu verbinden und so eine Anordnung aus gerillten Komponenten ohne Unterbrechung an ihrem Übergang zu bilden.

## Revendications

1. Composant annelé destiné à l'émission et à la manipulation de signaux électromagnétiques de fréquences allant de 30 GHz à 100 THz, ledit composant comportant un assemblage d'une pluralité de plaques (3, 4) empilées ensemble en une tige creuse (6) de guidage, lesdites plaques (3, 4) comportant des premières plaques (3) présentant une forme d'ouverture servant à former une rainure (1) et deuxième plaques (4) présentant une forme d'ouverture servant à former une nervure (2), lesdites plaques étant empilées de façon alternée et la forme extérieure desdites plaques (3, 4) correspondant à la forme intérieure de la tige creuse (6) de guidage.

2. Composant annelé selon la revendication 1, **caractérisé en ce que** ladite forme extérieure comporte des indentations.

3. Composant annelé selon la revendication 1 ou 2, **caractérisé en ce que** ladite ou lesdites ouvertures présentent une forme circulaire (10, 11) ou une forme autre que circulaire (16).

4. Composant annelé selon l'une des revendications précédentes, **caractérisé en ce que** la forme d'ouverture est fixe le long des composants ou variable.

5. Composant annelé selon l'une des revendications précédentes, **caractérisé en ce que** lesdites plaques comportent au moins deux ouvertures (10, 11, 15), l'une d'elles (15) étant utilisée pour le refroidissement du composant.

6. Composant annelé selon l'une des revendications précédentes, **caractérisé en ce qu'**il comporte une première bride (26) reliée à une première tige (20) et une deuxième bride (27) reliée à une deuxième tige (20), lesdites brides (26, 27) coopérant entre elles pour permettre un raccordement de lesdites tiges (20) entre elles sans discontinuité à la jonction.

7. Composant annelé selon l'une des revendications précédentes, **caractérisé en ce que** les brides (26, 27) sont à alignement automatique.

8. Composant annelé selon l'une des revendications précédentes, **caractérisé en ce que** les plaques (3, 4) sont comprimées via une bride (26, 27) fixée par une série de vis (25).

9. Composant annelé selon l'une des revendications précédentes, **caractérisé en ce qu'**il comporte des conicités décroissantes ou croissantes annelées.

10. Composant annelé selon l'une des revendications précédentes, formant une antenne cornet annelée.

11. Assemblage comportant une pluralité de composants annelés selon l'une des revendications précédentes.

12. Procédé de formation d'un composant annelé destiné à l'émission de signaux électromagnétiques d'une fréquence pouvant atteindre plusieurs THz selon l'une des revendications 1 à 10 qui précèdent, le procédé comportant l'empilement d'une pluralité desdites premières et deuxièmes plaques dont chacune présente au moins une ouverture servant au moins à l'émission de signaux pour former un assemblage de premières et deuxièmes plaques placées de façon alternée, ledit assemblage de plaques étant introduit dans ladite tige creuse de guidage, dont la forme intérieure correspond à la forme extérieure desdites plaques.

13. Procédé selon la revendication 12, **caractérisé en ce que** les plaques sont comprimées dans ladite tige creuse de guidage via au moins un ensemble de vis et une bride.

14. Procédé selon la revendication 12 ou 13, **caractérisé en ce que** les brides sont utilisées pour relier une tige à une autre, formant ainsi un assemblage de composants annelés sans discontinuité à leur jonction.
